# FASCICULE DE BREVET EUROPEEN

(11) **EP 1 701 859 B1**
(45) Date de publication et mention de la délivrance du brevet: **07.05.2008**
(21) Numéro de dépôt: 04816574.0
(22) Date de dépôt: 17.12.2004
(51) Int. Cl.: B60N 2/015

(54) **DISPOSITIF DE FIXATION D UN SIEGE D UN VEHICULE AUTOMOBILE**
VORRICHTUNG ZUR BEFESTIGUNG EINES KRAFTFAHRZEUGSITZES
DEVICE FOR FIXING A MOTOR VEHICLE SEAT

(30) Priorité: 30.12.2003 FR 0315559
(43) Date de publication de la demande: 20.09.2006
(73) Titulaire: RENAULT S.A.S., 78288 Guyancourt (FR)
(72) Inventeur: HLUBINA, Thierry, F-92370 Chaville (FR)
(86) Numéro de dépôt international: PCT/FR2004/050721
(87) Numéro de publication internationale: WO 2005/073015

(56) Documents cités:
- EP-A- 0 537 078
- EP-A- 0 572 300
- EP-A- 1 122 135
- FR-A- 2 805 228

## Description

L'invention concerne la fixation des sièges de véhicule automobile.

De nos jours, les ceintures de sécurité doivent être capables d'encaisser des efforts de plus en plus grands en cas de décélération brutale notamment. La reprise d'effort associée se fait par l'intermédiaire des boucles de ceintures et de leur attache sur le plancher du véhicule. On connaît par exemple du document EP-1 122 135 un agencement dans lequel des logements de fixation d'organe de ceintures de sécurité sont fixés à une pièce rapportée sur une base du plancher. Pour obtenir la rigidité nécessaire, la pièce et la base doivent présenter une épaisseur suffisante, ce qui est contraignant en termes d'encombrement et de poids. EP 0 572 300 A décrit un plancher de véhicule selon le préambule de la revendication 1.

L'invention s'applique en particulier aux véhicules dans lesquels les sièges arrières sont réglables en position suivant la direction longitudinale correspondant à la direction de marche du véhicule, et de surcroît peuvent changer de configuration en étant, pour certains d'entre eux, mobiles suivant une direction horizontale perpendiculaire à la direction de marche afin de passer d'une banquette à trois places à une banquette à deux places. Dans de telles circonstances, les dispositifs de ceinture de sécurité et la reprise d'effort associée doivent être prévus en conséquence.

Un but de l'invention est de fournir un agencement d'un type différent offrant un encombrement et un poids réduits et permettant si nécessaire les mobilités qui viennent d'être évoquées.

En vue de la réalisation de ce but, on prévoit selon l'invention un plancher de véhicule comportant les caractéristiques de la revendication 1.

Ainsi, les efforts en cas de décélération sont encaissés par la pièce de renfort. L'ouverture de la base réduit l'encombrement et le poids du plancher.

Le plancher selon l'invention pourra présenter en outre au moins l'une quelconque des caractéristiques suivantes :
- l'ouverture est commune à au moins deux des logements et de préférence à tous les logements ;
- il comprend au moins une pièce de fixation fixée à la pièce de renfort et portant au moins un des logements ;
- la ou chaque pièce de fixation porte une série de logements alignés ;
- il comprend au moins deux pièces de fixation ;
- la pièce de renfort présente au moins une ouverture traversante au droit des logement ;
- la ou chaque ouverture de la pièce de renfort est commune à au moins deux des logements associés à la pièce de renfort ;
- la pièce de renfort présente au moins deux ouvertures ;
- les logements s'étendent en saillie de la base ;
- les logements forment au moins une série de logements alignés ;
- les séries sont au moins au nombre de deux et parallèles entre elles ; et
- les logements sont associés à des sièges arrières du véhicule.

D'autres caractéristiques et avantages de l'invention apparaîtront encore dans la description suivante de deux modes préférés de réalisation donnés à titre d'exemples non limitatifs en référence aux dessins annexés sur lesquels :
- la figure 1 est une vue partielle en perspective d'un plancher selon l'invention ;
- la figure 2 est une vue partielle en coupe du plancher de la figure 1.

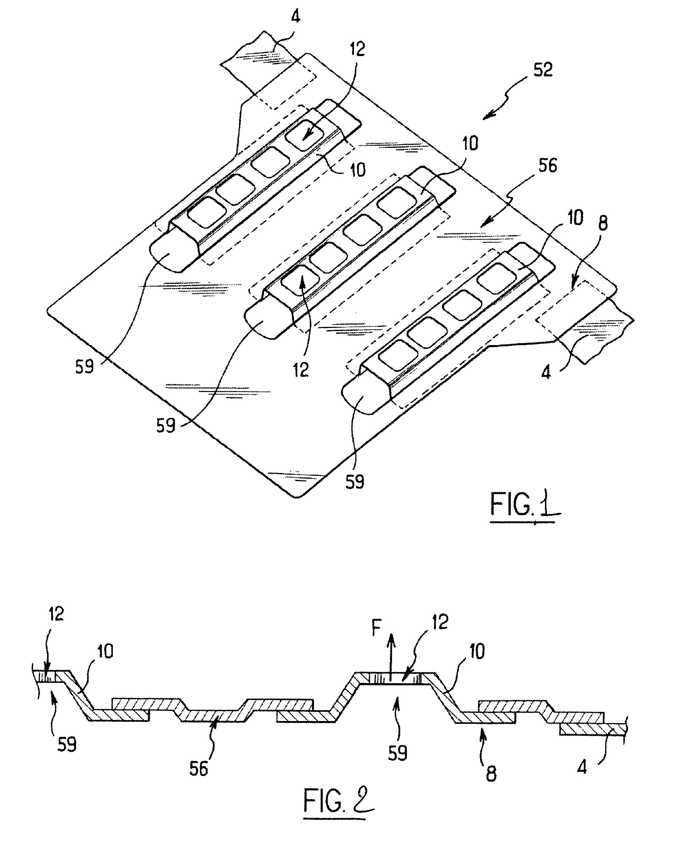

On va décrire en référence aux figures 1 et 2 une réalisation d'un plancher 52 selon l'invention.

Le plancher 52 comprend une base 4 formant la plus grande partie de ce plancher et dont seule une partie a été illustrée à la figure 1.

Il comprend en outre une pièce de renfort unique 56. La pièce de renfort 56 s'étend au droit d'une ouverture traversante 8 ménagée dans la base 4 dans une zone médiane de celle-ci.

Le plancher 52 comprend en outre au moins une pièce de fixation 10.

La base 4, la pièce de renfort 56 et les pièces de fixation 10 sont toutes en métal. Elles sont formées en l'espèce en tôle emboutie pour former des plaques.

Pour fabriquer le plancher, on rapporte les pièces de fixation 10 sur la pièce de renfort 56 en les soudant à cette dernière. De même, on rapporte la pièce de renfort 56 sur la base 4 en soudant la pièce sur la base.

La pièce de renfort 56 est rapportée par soudage sur la base 4 au droit d'une ouverture principale 8 de celle-ci.

La pièce de renfort 56 présente trois ouvertures 59 allongées suivant la direction de marche du véhicule. Chaque ouverture a une forme rectangulaire. Les ouvertures 59. s'étendent parallèlement les unes aux autres, en regard les unes des autres et à distance les unes des autres.

Les pièces de fixation 10 sont rapportées sur la pièce de renfort 56 par le dessous de celle-ci. Chaque pièce de fixation 10 est insérée dans l'ouverture correspondante 59 de sorte que sa partie supérieure émerge à travers l'ouverture 59 pour s'étendre en saillie de la base 4. Dans ce mode de réalisation par conséquent, la pièce de renfort 56 présente trois ouvertures traversantes 59 s'étendant au droit des trois séries de logements 12 respectifs. Chacune de ces ouvertures est commune aux quatre logements de la série associée à la pièce de renfort 10 concernée.

L'invention est efficace en terme de structure, dans la mesure où l'effort F exercé sur l'une quelconque des pièces de fixations 10 se transmet aux points de soudure en faisant intervenir toute l'épaisseur de la pièce de renfort 56.

Les pièces de renfort et de fixation sont, comme on l'a vu, agencées sous la forme de plaques.

Le plancher sera adapté à faire partie d'un véhicule en prévoyant que la plaque de renfort 56 s'étend au droit des sièges ou banquette arrières de ce véhicule. La banquette est fixée au plancher par trois crochets, par exemple alignés suivant une direction horizontale transversale à la direction de marche du véhicule. Chacun de ces crochets vient en prise avec l'une respective des séries d'encoches 12.

Le véhicule pourra être prévu de sorte que la position de la banquette est réglable en pouvant occuper différents emplacements suivant la direction de marche du véhicule. C'est la raison pour laquelle quatre logements sont disposés sur chaque pièce de fixation 10 en étant alignés suivant la direction de marche. Ce plancher permet donc d'offrir quatre positions différentes pour la banquette suivant la direction de marche du véhicule. Par ailleurs, cette banquette pourra être transformable pour passer d'une configuration à trois places à une configuration à deux places. Les organes de ceintures de sécurité destinés à recevoir les boucles de ceintures de sécurité sont fixés indirectement aux crochets engagés dans les encoches de sorte qu'en cas de choc du véhicule, la transmission d'effort à partir des organes de ceintures de sécurité se fait vers ces encoches et la pièce de renfort 56. Ainsi, les moyens de fixation sont répartis transversalement sur le plancher pour que les boucles de ceintures puissent être solidarisées au plancher quelles que soient la position et la configuration des sièges. On pourra par exemple à ce sujet se référer aux documents EP-1 122 135 et EP-0 457 699.

L'invention présente l'avantage de permettre une capacité maximale du réservoir du fait de l'espace laissé sous le plancher pour ce réservoir.

## Revendications

1. Plancher (52) de véhicule comportant :
- une base (4) ;
- une pièce de renfort (56) portant des logements (12) de fixation d'organes de ceinture de sécurité ; et
- au moins une pièce de fixation (10) fixée à la pièce de renfort (56) et portant au moins un des logements (12),
**caractérisé en ce que** la base présente une ouverture traversante (8) au droit des logements (12), **en ce que** la ou chaque pièce de fixation (10) est rapportée sur la pièce de renfort (56) par le dessous de celle-ci, et **en ce que** la pièce de renfort (56) présente au moins une ouverture traversante (59) au droit des logements (12).

2. Plancher selon la revendication précédente, **caractérisé en ce que** l'ouverture (8) est commune à au moins deux des logements et de préférence à tous les logements.

3. Plancher selon la revendication précédente, **caractérisé en ce que** la ou chaque pièce de fixation (10) porte une série de logements alignés.

4. Plancher selon la revendication 1 à 3, **caractérisé en ce qu'**il comprend au moins deux pièces de fixation (10).

5. Plancher selon l'une des revendications 1 à 4, **caractérisé en ce que** la ou chaque ouverture (59) de la pièce de renfort (56) est commune à au moins deux des logements (12) associés à la pièce de renfort.

6. Plancher selon au moins l'une quelconque des revendications précédentes, **caractérisé en ce que** la pièce de renfort (56) présente au moins deux ouvertures (59).

7. Plancher selon au moins l'une quelconque des revendications précédentes, **caractérisé en ce que** les logements (12) s'étendent en saillie de la base (4).

8. Plancher selon au moins l'une quelconque des revendications précédentes, **caractérisé en ce que** les logements (12) forment au moins une série de logements alignés.

9. Plancher selon la revendication précédente, **caractérisé en ce que** les séries sont au moins au nombre de deux et parallèles entre elles.

10. Plancher selon au moins l'une quelconque des revendications précédentes, **caractérisé en ce que** les logements (12) sont associés à des sièges arrières du véhicule.

## Claims

1. Floor (52) of a vehicle comprising:
- a base (4);
- a reinforcing piece (56) supporting housings (12) for attaching safety belt members; and
- at least one attachment piece (10) attached to the reinforcing piece (56) and supporting at least one of the housings (12),
**characterized in that** the base has a through opening (8) in line with the housings (12), **in that** the or each attachment piece (10) is fitted to the reinforcing piece (56) on top of the latter, and **in that** the reinforcing piece (56) has at least one through opening (59) in line with the housings (12).

2. Floor according to the preceding claim, **characterized in that** the opening (8) is common with at least two of the housings and preferably with all the housings.

3. Floor according to either of the preceding claims **characterized in that** the or each attachment piece (10) supports a series of aligned housings.

4. Floor according to one of Claims 1 to 3, **characterized in that** it comprises at least two attachment pieces (10).

5. Floor according to one of Claims 1 to 4, **characterized in that** the or each opening (59) of the reinforcing piece (56) is common with at least two of the housings (12) associated with the reinforcing piece.

6. Floor according to at least one of the preceding claims, **characterized in that** the reinforcing piece (56) has at least two openings (59).

7. Floor according to at least one of the preceding claims, **characterized in that** the housings (12) extend as protrusions from the base (4).

8. Floor according to at least one of the preceding claims, **characterized in that** the housings (12) form at least one series of aligned housings.

9. Floor according to the preceding claim, **characterized in that** the series are at least two in number and parallel with one another.

10. Floor according to at least one of the preceding claims, **characterized in that** the housings (12) are associated with rear seats of the vehicle.

## Patentansprüche

1. Fahrzeugboden (52), der aufweist:
- eine Grundplatte (4),
- ein Verstärkungsteil (56), das Aufnahmen (12) zur Befestigung von Sicherheitsgurtorganen trägt; und
- mindestens ein Befestigungsteil (10), das am Verstärkungsteil (56) befestigt ist und mindestens eine der Aufnahmen (12) trägt,
**dadurch gekennzeichnet, dass** die Grundplatte eine Durchgangsöffnung (8) im rechten Winkel zu den Aufnahmen (12) aufweist, dass das oder jedes Befestigungsteil (10) an das Verstärkungsteil (56) von dessen Unterseite angesetzt wird, und dass das Verstärkungsteil (56) mindestens eine Durchgangsöffnung (59) im rechten Winkel zu den Aufnahmen (12) aufweist.

2. Boden nach dem vorhergehenden Anspruch, **dadurch gekennzeichnet, dass** die Öffnung (8) mindestens zwei der Aufnahmen und vorzugsweise allen Aufnahmen gemeinsam ist.

3. Boden nach einem der vorhergehenden Ansprüche, **dadurch gekennzeichnet, dass** das oder jedes Befestigungsteil (10) eine Reihe von fluchtend angeordneten Aufnahmen trägt.

4. Boden nach einem der Ansprüche 1 bis 3, **dadurch gekennzeichnet, dass** er mindestens zwei Befestigungsteile (10) aufweist.

5. Boden nach einem der Ansprüche 1 bis 4, **dadurch gekennzeichnet, dass** die oder jede Öffnung (59) des Verstärkungsteils (56) mindestens zwei der Aufnahmen (12) gemeinsam ist, die dem Verstärkungsteil zugeordnet sind.

6. Boden nach mindestens einem der vorhergehenden Ansprüche, **dadurch gekennzeichnet, dass** das Verstärkungsteil (56) mindestens zwei Öffnungen (59) aufweist.

7. Boden nach mindestens einem der vorhergehenden Ansprüche, **dadurch gekennzeichnet, dass** die Aufnahmen (12) sich von der Grundplatte (4) vorstehend erstrecken.

8. Boden nach mindestens einem der vorhergehenden Ansprüche, **dadurch gekennzeichnet, dass** die Aufnahmen (12) mindestens eine Reihe von fluchtend angeordneten Aufnahmen bilden.

9. Boden nach dem vorhergehenden Anspruch, **dadurch gekennzeichnet, dass** es mindestens zwei Reihen gibt, die parallel zueinander sind.

10. Boden nach mindestens einem der vorhergehenden Ansprüche, **dadurch gekennzeichnet, dass** die Aufnahmen (12) Rücksitzen des Fahrzeugs zugeordnet sind.
